# EUROPÄISCHE PATENTSCHRIFT

(11) **EP 1 678 431 B1**
(45) Veröffentlichungstag und Bekanntmachung des Hinweises auf die Patenterteilung: **02.03.2011**
(21) Anmeldenummer: 04765779.6
(22) Anmeldetag: 02.10.2004
(51) Int. Cl.: F16H 63/30, F16D 25/10, F16D 25/0638, F16D 13/72

(54) **BETÄTIGUNGSANORDNUNG IN EINEM GETRIEBE FÜR ZWEI DRUCKMITTELBETÄTIGBARE SCHALTELEMENTE**
ACTUATING ARRANGEMENT IN A TRANSMISSION FOR TWO PRESSURE MEDIUM-ACTUATABLE SHIFT ELEMENTS
SYSTEME D'ACTIONNEMENT DANS UNE TRANSMISSION POUR DEUX ELEMENTS DE PASSAGE DE VITESSES ACTIONNABLES PAR MILIEU DE PRESSION

(30) Priorität: 30.10.2003 DE 10350759
(43) Veröffentlichungstag der Anmeldung: 12.07.2006
(60) Teilanmeldung: 10188741.2
(73) Patentinhaber: ZF FRIEDRICHSHAFEN Aktiengesellschaft, 88038 Friedrichshafen (DE)
(72) Erfinder: GIERLING, Armin, 88085 Langenargen (DE)
(86) Internationale Anmeldenummer: PCT/EP2004/011030
(87) Internationale Veröffentlichungsnummer: WO 2005/047739

(56) Entgegenhaltungen:
- EP-A- 1 113 189
- EP-A- 1 195 537
- DE-U- 9 114 528
- US-A- 3 823 802
- US-A1- 2003 087 720

## Beschreibung

Die Erfindung betrifft eine Betätigungsanordnung in einem Getriebe für zwei druckmittelbetätigbare Schaltelemente gemäß dem Oberbegriff des Patentanspruchs 1 bzw. gemäß dem Oberbegriff des Patentanspruchs 5.

Aus der US 2003/0087720 A1 ist ein Stufenautomatgetriebe mit einem Planetensatz und druckmittelbetätigbaren Getriebeschaltelementen bekannt. Diese Getriebeschaltelemente sind als zwei schaltbare Kupplungen ausgebildet, die einen gemeinsamen Außenlamellenträger zur Aufnahme von Außenlamellen der Kupplungen nutzen. Der gemeinsame Außenlamellenträger weist eine topfförmige Halbquerschnittsgeometrie auf, dessen Symmetrieachse mit der Längsachse einer Getriebeeingangswelle zusammenfällt. Dadurch bildet der Außenlamellenträger einen Kupplungsraum, innerhalb dessen die Lamellenpakete und die Servoeinrichtungen beider Kupplungen angeordnet sind.

Die beiden hier näher zu betrachtenden Lamellenpakete der genannten Kupplungen sind axial und radial unmittelbar nebeneinander angeordnet. Zudem wirken die Servoeinrichtungen derart auf der beiden Lamellenpakete, dass die Schließrichtung beider Kupplungen gleich ist und vom Topfboden des Außenlamellenträgers wegweist. Dazu sind die Druckräume der beiden Servoeinrichtungen axial unmittelbar nebeneinander angeordnet.

Der Kolben der Servoeinrichtung zur Betätigung des zweiten, topfbodenfemen Lamellenpaketes befindet sich axial zwischen dem Kolben der Servoeinrichtung zur Betätigung der ersten, topfbodennahen Lamellenkupplung sowie dem Topfboden des Außenlamellenträgers. Außerdem ist der Kolben zur Betätigung des ersten, topfbodennahen Lamellenpaketes zwischen dem Kolben für das zweite, topfbodenfeme Lamellenpaket und dem topfbodennahen Lamellenpaket angeordnet.

Zudem sei angemerkt, dass die Innenlamellen der beiden Kupplungen dieses bekannten Automatgetriebes von zwei separaten Innenlamellenträgem getragen werden.

Durch diesen Aufbau ergibt es sich, dass der Kolben zur Betätigung des zweite, topfbodenfemen Lamellenpaketes die beiden Druckräume der beiden Servoeinrichtungen axial voneinander trennt.

Ein weiteres Merkmal dieses Getriebes ist, dass nur der Servoeinrichtung zur Betätigung des ersten, topfbodennahen Lamellenpaketes ein Raum für einen dynamischen Betätigungsdruckausgleich zugeordnet ist. Dabei trennt der genannte Kolben zur Betätigung des ersten, topfbodennahen Lamellenpaketes den Druckraum für diesen Kolben sowie den Druckausgleichsraum axial voneinander.

Als nachteilig bei diesem Getriebe wird nun erachtet, dass der Druck im Druckraum der Servoeinrichtung zur Betätigung der ersten, topfbodennahen Kupplung den Druck im Druckraum der Servoeinrichtung zur Betätigung der zweiten, topfbodenfemen Kupplung beeinflusst und umgekehrt.
Außerdem wird es als konstruktiv aufwendig beurteilt, dass der Kolben zur Betätigung der zweiten, topfbodenfemen Kupplung die Außenlamellen der ersten, topfbodennahen Kupplung axial durchgreift. Dazu sind die Außenlamellen der topfbodennahen ersten Kupplung im Bereich ihres Außendurchmessers mit axialen Durchgriffsöffnungen ausgestattet, durch die der genannte Kolben geführt ist. Dazu müssen die Außenlamellen der ersten Lamellenkupplung radial vergleichsweise lang ausgebildet sein, was schließlich zu einem vergrößerten Durchmesser des Getriebes führt.

Weiterhin ist aus der DE 91 14 528 U1 eine gettungsgemäße Anordnung mit zwei ineinander verschachtelt angeordneten Lamellenkupplungen in Art einer Doppelkupplung bekannt, bei der die Lamellenpakete axial nebeneinander links und rechts neben einem lamellenträgerfesten Anschlag auf einem gemeinsamen antriebswellenfesten Innenlamellenträger montiert sind. Zur Betätigung dieser beiden Lamellenkupplungen unabhängig voneinander sind zwei hydraulische Servoeinrichtungen vorgesehen, mit je einem räumlich gesehen radial unterhalb der Lamellenpakete angeordneten Druckraum und mit ie einem axial verschiebbar an dem Innenlamellenträger gelagerten hydraulisch betätiabaren Kolben, welcher das jeweils zugeordnete Lamellenpaket beim Schließen der jeweiligen Kupplung axial gegen den genannten Anschlag drückt. Die Betätigungsrichtung der servoeinrichtungen ist also unterschiedlich. Während der linke Kolben das offene Ende des zylinderförmigen Innenlamellenträger meanderförmig in axialer und radialer Richtung umgreift, weist der rechte Kolben umfangsverteilt axial gerichtete Durchbrüche zum Durchgriff durch den Innenlamellenträger in axialer Richtung auf.

Vor diesem Hintergrund besteht die Aufgabe an die Erfindung, eine altemative Konstruktion für eine Betätigungsanordnung für zwei Schaltelemente der beschriebenen Art vorzustellen. In Abkehr vom genannten Stand der Technik der US 2003/0087720 A1 sollen dabei die beiden Schaltelemente des Getriebes druckunabhängig voneinander betätigbar sein.

Die Lösung dieser Aufgabe ergibt sich aus den Merkmalen der unabhängigen Patentansprüche 1 und 5, während vorteilhafte Ausgestaltungen und Weiterbildungen der Erfindung den Unteransprüchen entnehmbar sind.

Die Erfindung geht von der Erkenntnis aus, dass sich die gestellte Aufgabe lösen lässt, wenn abweichend vom Stand der Technik bei einer gattungsgemäßen Betätigungsvorrichtung ein gemeinsamer Innenlamellenträger die Innenlamellen axial unmittelbar benachbarter Lamellen-Reibschaltelemente trägt.

Demnach betrifft die Erfindung eine Betätigungsanordnung in einem Stufenautomatgetriebe für zwei axial unmittelbar hintereinander und radial im wesentlichen am gleichen Getriebedurchmesser angeordnete druckmittelbetätigbare Reibschaltelemente, denen jeweils eine eigene Servoeinrichtung zugeordnet ist.

Diese Betätigungsanordnung ist darüber hinaus dadurch gekennzeichnet, dass die Schaltelemente als Lamellenkupplung oder Lamellenbremse ausgebildet sind, deren Innenlamellen und Außenlamellen auf Lamellenträgern befestigt sind, dass die Innenlamellen beider Lamellenkupplungen bzw. Lamellenbremsen auf einem gemeinsamen Innenlamellenträger angeordnet sind, dass der Innenlamellenträger hinsichtlich seiner Querschnittsgeometrie als axial einseitig geöffneter Topf ausgebildet ist, und dass die beiden Servoeinrichtungen radial zumindest überwiegend innerhalb des durch den topfförmigen Innenlamellenträger gebildeten Topfraum angeordnet sowie zumindest teilweise axial nebeneinander und im wesentlichen radial unterhalb der Lamellenpakete der beiden Schaltelemente positioniert sind.

Weitere Bestandteile der Erfindung werden im Zusammenhang mit einer ersten Ausführungsform der Erfindung verwirklicht. Bei dieser ersten Ausführungsform ist vorgesehen, dass beide Schaltelemente als Lamellenkupplungen ausgebildet sind, deren gemeinsamer Innenlamellenträger im Bereich axial zwischen den beiden Lamellenpaketen umfangsverteilte radiale Durchbrüche aufweist.

Erfindungsgemäß ist vorgesehen, dass die erste, topfbodennahen Servoeinrichtung zur Betätigung der ersten, topfbodennahen Lamellenkupplung über einen axial beweglichen Kolben verfügt, an dem über den Umfang verteilt mehrere radial ausgerichtete Finger ausgebildet sind, die mit ihrem radial inneren Ende mit dem Kolben verbunden sind und mit ihrem radial äußeren Ende auf das Lamellenpaket der ersten, topfbodennahen Lamellenkupplung wirken. Dabei durchgreifen die Finger des Kolbens der ersten, topfbodennahen Servoeinrichtung die genannten radialen Durchbrüche des gemeinsamen Innenlamellenträgers in radialer Richtung.

Weiterhin ist erfindungsgemäß vorgesehen, dass die zweite, topfbodenfeme Servoeinrichtung zur Betätigung der zweiten, topfbodenfemen Lamellenkupplung über einen axial beweglichen Kolben verfügt, an dem ein radial ausgerichteter, ringförmiger Druckteller ausgebildet ist, der mit seinem radial inneren Durchmesser mit dem Kolben verbunden ist und mit seinem radial äußeren Durchmesser auf das Lamellenpaket der zweiten, topfbodenfemen Lamellenkupplung wirkt. Dabei umgreift der Druckteller des Kolbens der zweiten, topfbodenfernen Servoeinrichtung den gemeinsamen Innenlamellenträger an dessen axial offenem Ende in radialer und axialer Rich-tung. Anstelle des genannten ringförmigen Drucktellers des Kolbens der zweiten, topfbodenfemen Servoeinrichtung können auch über den Umfang verteilt mehrere radial ausgerichtete Finger vorgesehen sein, die dann mit ihrem radial inneren Ende mit dem Kolben verbunden sind und mit ihrem radial äußeren Ende auf das Lamellenpaket der ersten, topfbodennahen Lamellenkupplung wirken.

Dieser Aufbau der Betätigungsanordnung erlaubt nun, dass bei einer Druckbeaufschlagung der Druckräume der beiden Servoeinrichtungen zum separaten Schließen der beiden Lamellenkupplungen die beiden Kolben individuell und achsparallel in Richtung zum Topfboden des Innenlamellenträgers bewegbar sind. Dabei erfolgt das Schließen der beiden Lamellenkupplungen bei dieser ersten Variante in die gleiche axiale Richtung.

Zur weiteren Verbesserung einer solchen, an sich schon funktionsfähigen Betätigungsanordnung für zwei Lamellenkupplungen der genannten Art kann in Weiterbildung der Erfindung vorgesehen sein, dass den Servoeinrichtungen axial benachbart jeweils ein Druckausgleichsraum für den dynamischen Betätigungsdruckausgleich zugeordnet ist.

Dazu kann vorgesehen sein, dass der dem ersten, topfbodennahen Kolben zugeordnete Druckausgleichsraum axial an den Topfboden des Innenlamellenträgers angrenzt, während der dem zweiten, topfbodenfernen Kolben zugeordnete Druckausgleichsraum axial zwischen dem ersten Kolben und dem zweiten, topfbodenfemen Kolben angeordnet ist.

Zudem kann der dem ersten Kolben zugeordnete Druckausgleichsraum axial links oder rechts vom Druckraum für den ersten, topfbodennahen Kolben angeordnet sein. Dementsprechend kann auch vorgesehen sein, dass der dem zweiten Kolben zugeordnete Druckausgleichsraum axial links oder rechts vom Druckraum für den zweiten, topfbodenfemen Kolben angeordnet ist.

Eine weitere Ausgestaltung einer erfindungemäß ausgebildeten Betätigungsanordnung gemäß dieser ersten Variante sieht vor, dass Kühlöl aus den Druckausgleichräumen zu den Lamellen der beiden Lamellenpakete über Strömungswege abfließen kann, die sich im wesentlichen zwischen der radialen Außenseite der Druckausgleichsräume sowie der radialen Innenseite des Innenlamellenträgers befinden und durch radiale Öffnungen in dem gemeinsamen Innenlamellenträger unterhalb der Innenlamellen zu diesen führen.

Bei einer zweiten konstruktiven Variante der erfindungsgemäßen Betätigungsanordnung ist vorgesehen, dass die Schließrichtungen der beiden jeweils als Lamellenkupplung ausgebildeten Schaltelemente zueinander entgegengerichtet sind.

In Weiterbildung dieser zweiten Variante ist es vorteilhaft, wenn die erste, topfbodennahe Lamellenkupplung durch ziehende Betätigung des Kolbens der ersten, topfbodennahen Servoeinrichtung in Richtung zum Topfboden geschlossen wird, während die zweite, topfbodenfeme Lamellenkupplung durch drückende Betätigung des Kolbens der zweiten, topfbodenfemen Servoeinrichtung weg vom Topfboden geschlossen wird.

Zudem ist es sinnvoll, wenn die erste, topfbodennahe Servoeinrichtung zur Betätigung des ersten, topfbodennahen Lamellenpaketes an den Topfboden des gemeinsamen Innenlamellenträgers angrenzt.

Ein besonders kompakter Aufbau der Betätigungsanordnung ergibt sich, wenn die zweite, topfbodenfeme Servoeinrichtung zur Betätigung des zweiten, topfbodenfemen Lamellenpaketes axial an die erste, topfbodennahe Servoeinrichtung angrenzt und radial zumindest teilweise unterhalb des zweiten, topfbodenfemen Lamellenpaketes angeordnet ist.

Ein weiteres erfindungsgemäßes Element der zweiten Variante ist, dass der gemeinsame Innenlamellenträger im Bereich axial zwischen den beiden Lamellenpaketen umfangsverteilte radiale Durchbrüche aufweist, und dass die beiden Kolben axial unmittelbar hintereinander angeordnet sind.

Darüber hinaus weisen die beiden Kolben am Außendurchmesser radiale Finger auf, die umfangsverteilt jeweils axial hintereinander oder in der gleichen Axial-Ebene des Getriebes angeordnet sind und den gemeinsamen Innenlamellenträger in jeweils zugeordneten radialen Durchbrüchen durchdringen.

Die radial äußeren (freien) Enden der Finger der ersten, topfbodennahen Servoeinrichtung drücken bei einer Druckbeaufschlagung des Druckraumes dieser ersten Servoeinrichtung axial in Richtung zum Topfboden hin auf das Lamellenpaket des ersten, topfbodennahen Lamellenpaketes, während die radial äußeren (freien) Enden der Finger der zweiten, topfbodenfemen Servoeinrichtung bei einer Druckbeaufschlagung des Druckraumes dieser Servoeinrichtung axial weg vom Topfboden auf das Lamellenpaket des zweiten, topfbodenfemen Lamellenpaketes drücken.

Eine andere Ausgestaltung dieser zweiten konstruktiven Variante sieht vor, dass der Druckausgleichsraum der ersten, topfbodennahen Lamellenkupplung radial unterhalb derselben und unmittelbar an den Topfboden des Innenlamellenträgers angrenzt sowie ein Strömungsweg für Kühlöl gebildet ist, der von diesem Druckausgleichsraum durch radiale Durchtrittsöffnungen im Innenlamellenträger bis zu den Lamellen des ersten, topfbodennahen Lamellenpaketes führt.

Einen ähnlichen Aufbau sieht die Erfindung hinsichtlich des Druckausgleichsraumes der zweiten, topfbodenfemen Lamellenkupplung vor, wobei dieser radial unterhalb derselben und fem vom Topfboden des Innenlamellenträgers angeordnet ist. Zudem ist ein Strömungsweg für Kühlöl vorgesehen, der von dem Druckausgleichsraum über radiale Durchtrittsöffnungen im Innenlamellenträger zu den Lamellen des zweiten, topfbodenfemen Lamellenpaketes führt.

Es ist dabei möglich, dass der Druckausgleichsraum der ersten, topfbodennahen Lamellenkupplung links oder rechts vom Druckraum für den Kolben der ersten Servoeinrichtung angeordnet ist. So kann vorgesehen sein, dass der Druckausgleichsraum der zweiten, topfbodenfemen Lamellenkupplung axial unmittelbar neben dem Druckraum der Servoeinrichtung zur Betätigung der ersten, topfbodennahen Lamellenkupplung angeordnet ist.

Dementsprechend kann auch vorgesehen sein, dass der Druckausgleichsraum der zweiten, topfbodenfemen Lamellenkupplung axial links oder rechts vom Druckraum der Servoeinrichtung für die zweite Lamellenkupplung ausgebildet ist.

Schließlich ist es bei möglich, dass der Druckausgleichsraum der zweiten, topfbodenfemen Lamellenkupplung im Bereich des topfbodenfemen axialen Randes des Innenlamellenträgers angeordnet ist.

Hinsichtlich beider konstruktiven Varianten einer erfindungsgemäß ausgebildeten Betätigungsanordnung kann es bei speziellen Getriebebauweisen sinnvoll sein, dass die Kühlölversorgung wenigstens eines der beiden Lamellenpakete über einen gesonderten Zuführweg erfolgt, der radial nicht durch den gemeinsamen Innenlamellenträger führt.

Letztlich wird es als vorteilhaft angesehen, wenn die Innenlamellen der Lamellenkupplungen als Belaglamellen ausgebildet sind.

Im Unterschied zu den bisher vorgestellten Schaltelementausbildungen kann auch vorgesehen sein, dass mindestens eines der beiden Schaltelemente als Getriebebremse ausgebildet ist. Ist nur eines der beiden Schaltelemente als Lamellenbremse ausgeführt, so ist dessen Außenlamellenträger drehfest mit dem Getriebegehäuse verbunden. Sind beiden Schaltelemente als Lamellenbremse ausgeführt, so ist entweder deren gemeinsamer Innenlamellenträger drehfest mit dem Getriebegehäuse verbunden, oder aber beide Außenlamellenträger der Lamellenträger sind drehfest mit dem Getriebegehäuse verbunden.

Zum besseren Verständnis der Erfindung ist der Beschreibung eine Zeichnung beigefügt, in der in zwei Figuren unterschiedliche Ausführungsformen des erfindungsgemäßen Grundprinzips dargestellt sind, am Beispiel von zwei nebeneinander angeordneten Lamellenkupplungen. Darin zeigen
- Fig. 1: einen schematischen Halbquerschnitt durch zwei axial hin- tereinander angeordnete Lamellenkupplungen eines Ge- triebes sowie zugehörige Betätigungseinrichtungen,
- Fig. 2: eine Darstellung wie in Fig. 1, jedoch bei einer zwei- ten Betätigungsanordnung.

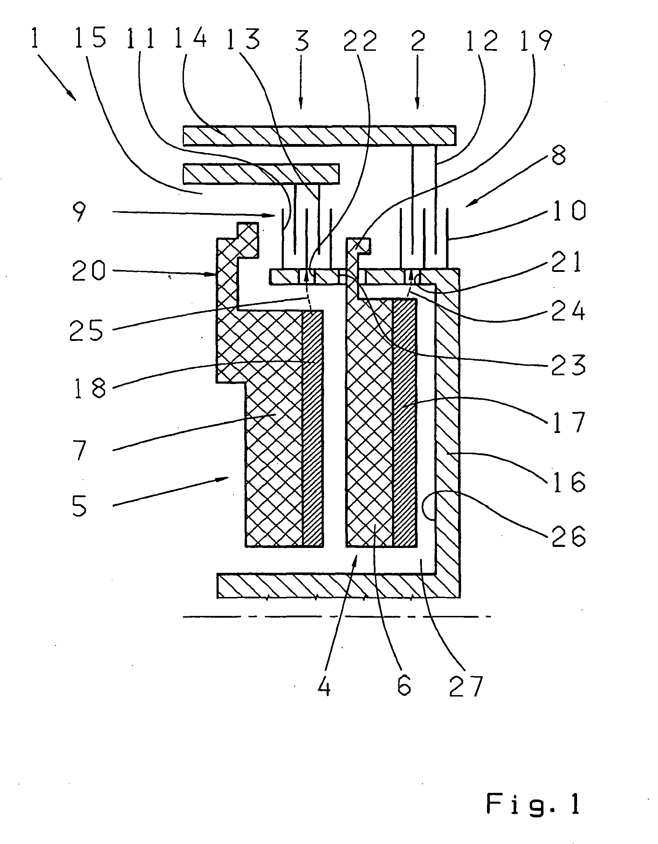

Wie Fig. 1 demnach zu entnehmen ist, umfasst die erste Variante einer erfindungsgemäß aufgebauten Betätigungsanordnung 1 zunächst zwei beispielhaft als lamellenkupplungen 2, 3 ausgebildete Getriebeschaltglieder, deren Außenlamellen 12, 13 mit jeweils einen kupplungsindividuellen Außenlamellenträger 14, 15 fest verbunden sind. Diese Außenlamellenträger 14, 15 stehen mit anderen, hier nicht dargestellten Bauteilen des Automatgetriebes in Wirkverbindung, so dass, wie aus der eingangs erwähnten US 200310087720 A1 bekannt, durch die Betätigung zumindest der beiden Lamellenkupplungen 2, 3 unterschiedliche Getriebeübersetzungsstufen realisierbar sind.

Darüber hinaus gehören zu jeder dieser beiden Lamellenkupplungen 2, 3 Innenlamellen 10 und 11, die axial wechselweise zu den genannten Außenlamellen 12, 13 drehfest und axial verschiebbar auf einen für beide Lamellenkupplungen 2, 3 gemeinsamen Innenlamellenträger 16 angeordnet sind. Dieser Innenlamellenträger 16 steht ebenfalls mit wenigstens einem weiteren, hier nicht dargestellten Getriebebauteil in Wechselwirkung.

Durch diesen Aufbau verfügt jede der beiden Lamellenkupplungen 2, 3 über ein Lamellenpaket 8 beziehungsweise 9, bei denen die Innenlamellen 10, 11 vorzugsweise als Belaglamellen ausgebildet sind.

Zudem wird darauf hingewiesen, dass der gemeinsame Innenlamellenträger 16 eine etwa topfförmige Querschnittsgeometrie aufweist, dessen Topfboden 26 durch einen radialen Abschnitt des Innenlamellenträgers 16 gebildet wird. Dadurch wird durch den Innenlamellenträger 16 ein sogenannter Topfraum 27 gebildet, der nach einer axialen Seite offen ist.

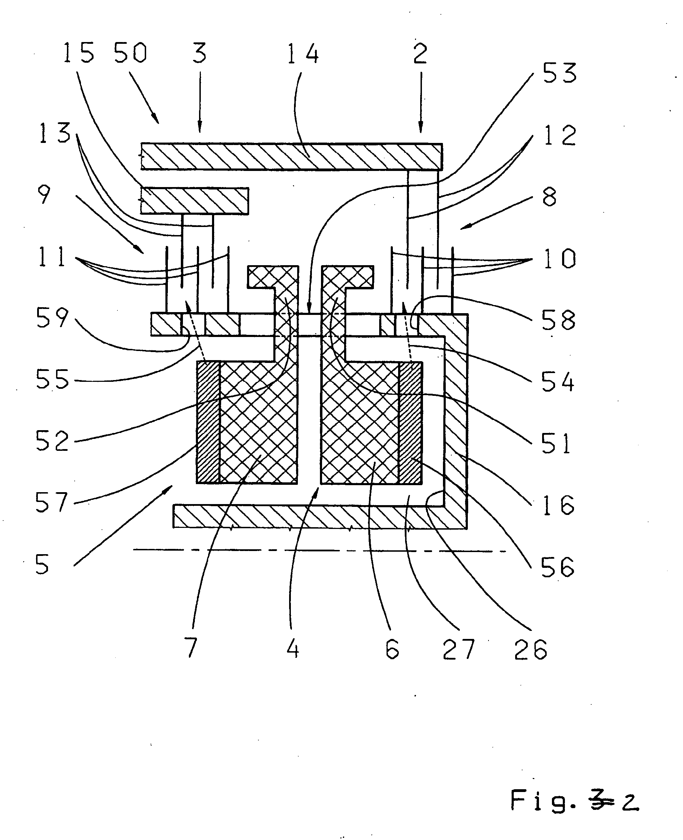

Den als Lamellenkupplungen 2, 3 ausgebildeten Getriebeschaltelementen gemäß Fig. 1 und Fig. 2 ist zur Kupplungsbetätigung jeweils eine eigene Servoeinrichtung 4, 5 zugeordnet. Diese Servoeinrichtungen 4, 5 umfassen je einen Druckraum für ein vorzugsweise hydraulisches Druckmittel und jeweils einen Kolben 6, 7, wobei letztere axial beweglich in dem Topfraum 27 angeordnet sind. Der durch den gemeinsamen Innenlamellenträger 16 gebildete Topfraum 27 wird daher als Zylinder für die Kolben 6, 7 beider Servoeinrichtungen genutzt.

Wie Fig. 1 entnehmbar ist, sind den beiden Kolben 6, 7 Druckausgleichsräume 17, 18 für einen an sich bekannten dynamischen Betätigungsdruckausgleich zugeordnet, die über eine gemeinsame oder separate Zuführwege mit vorzugsweise einem Kühlöl befüllbar sind. Dieses Kühlöl kann an den jeweiligen radialen Ende der Druckausgleichsräume 17, 18 aus diesen austreten und über Strömungswege 24, 25 und radiale Durchbrüche 21, 22 in dem gemeinsamen Lamellenträger 16 zu den Lamellenpaketen 8, 9 der beiden Lamellenkupplungen 2, 3 gelangen.

Die in Fig. 1 dargestellte Betätigungsanordnung 1 zeichnet sich durch eine vergleichsweise einfache und axial kurze Bauweise aus. Dies wird im wesentlichen dadurch erreicht, dass an dem Kolben 6 der ersten, dem Topfboden 26 nahen Servoeinrichtung 4 am Umfang verteilt mehrere radiale Finger 19 ausgebildet sind, die in dem gemeinsamen Innenlamellenträger 16 am Umfang verteilt angeordnete radiale Ausnehmungen 23 durchgreifen. Diese Ausnehmungen 23 sind zwischen dem ersten, topfbodennahen Lamellenpaket 8 und dem zweiten, topfbodenfemen Lamellenpaket 9 positioniert. Jeder dieser Ausnehmungen 23 ist jeweils ein Finger 19 zugeordnet.

An ihren radial äußeren Enden weisen die Finger 19 des ersten Kolbens 6 jeweils eine Wirkfläche auf, die axial gegen das topfbodennahe Lamellenpaket 8 gerichtet ist. Bei einer Betätigung der ersten, topfbodennahen Servoeinrichtung 4 wird der Kolben 6 sozusagen ziehend achsparallel in Richtung zum Topfboden 26 bewegt, so dass die genannten Finger 19 die Lamellen 11, 12 des ersten Lamellenpaketes 8 die Lamellenkupplung 2 schließend zusammendrücken.

Zum Schließen der zweiten, topfbodenfemen Lamellenkupplung 3 verfügt der Kolben 7 der zweiten, topfbodenfemen Servoeinrichtung 5 über einen im wesentlichen radial ausgerichteten, ringförmigen Druckteller 20, der das topfbodenfeme axial offene Ende des Innenlamellenträgers 16 axial und radial umgreift. An seinem Innendurchmesser ist dieser Druckteller 20 mit dem Kolben 7 verbunden. An seinem Außendurchmesser weist der Druckteller 20 eine Wirkfläche auf, die axial gegen das zweite, topfbodenferne Lamellenpaket 9 gerichtet ist. Eine Druckbeaufschlagung des zweiten, topfbodenfernen Kolbens 7 führt daher zu einer Kolben- und Drucktellerbewegung achsparallel in Richtung zum Topfboden 26 sowie zu einem Schließen der zweiten, topfbodenfemen Kupplung 3.

Zur Vereinfachung der Darstellung ist die genaue Ausbildung der Druckräume zur Betätigung der Kolben 6, 7 der beiden Servoeinrichtungen 4, 5 in den Figuren 1 und 2 nicht im Detail dargestellt. Da die beiden Kolben 6, 7 unabhängig voneinander und ohne Druckbeeinflussung durch die jeweils andere Servoeinrichtung betätigbar sind, ist es sinnvoll, dass die genanten Druckräume jeweils auf der druckausgleichsraumfemen Seite der Kolben 6, 7 angeordnet sind. Zudem ist vorzusehen, dass zwischen den beiden Druckräumen oder einem Druckraum und einem benachbarten Druckausgleichsraum jeweils eine drucktrennende Wand angeordnet ist.

Auch bei der zweiten Variante einer erfindungsgemäß ausgebildeten Betätigungsanordnung 50 sind die Außenlamellenträger 14 und 15, die daran befestigten Außenlamellen 12 beziehungsweise 13, der für beide Lamellenkupplungen 2, 3 gemeinsame Innenlamellenträger 16 mit den daran angeordneten Innenlamellen 10 beziehungsweise 11 und die beiden Servoeinrichtungen 4, 5 im wesentlich gleich ausgebildet oder angeordnet wie bei der Betätigungsanordnung 1 gemäß Fig. 1.

Während bei den beiden bereits vorgestellten Varianten die Schließrichtung der jeweiligen Lamellenkupplungen in die gleiche Richtung, nämlich achsparallel im wesentlichen in Richtung zum Topfboden 26 weist, wirken die Kolben 6, 7 der in Fig. 2 gezeigten Betätigungsvorrichtung 50 in entgegengesetzte Richtungen.

Daher sind an jedem der beiden Kolben 6, 7 am Umfang verteilt mehrere radial ausgerichtete Finger 51, 52 ausgebildet, die radiale Durchbrüche 53 an dem gemeinsamen Innenlamellenträger 16 radial durchdringen. Diese Durchbrüche 53 im Außendurchmesser des Innenlamellenträgers 16 sind ebenfalls am Umfang verteilt angeordnet. Zweckmäßigerweise ist jedem dieser Durchbrüche 53 jeweils ein Finger 51 und jeweils ein Finger 52 zugeordnet. An ihren radial inneren Enden, noch innerhalb des Topfraumes 27, sind diese Finger 51, 52 mit dem jeweils zugeordneten Kolben 6, 7 verbunden. An ihren radial äußeren Enden weisen diese Finger 51, 52 freie Wirkflächen auf, die jedoch in entgegengesetzte Richtungen weisen (achsparallel zum Topfboden 26 hin gerichtete beziehungsweise von diesem Topfboden 26 weg gerichtet), jeweils auf eines der beiden Lamellenpakete 8, 9.

In Fig. 2 sind die Finger 51, 52 der beiden Kolben 6, 7 räumlich gesehen umfangsverteilt axial hintereinander angeordnet. Zur Einsparung von axialer Baulänge der Kupplungsanordnung kann jedoch auch vorgesehen sein, dass die Finger 51, 52 der beiden Kolben 6, 7 räumlich gesehen zueinander in Umfangsrichtung axial ineinander verschränkt in der gleichen Axialebene des Getriebes angeordnet sind.

Durch diesen Aufbau wird erreicht, dass bei einer Druckbeaufschlagung des ersten, topfbodennahen Kolbens 6 sich dieser zusammen mit seinen Fingern 52 achsparallel in Richtung zum Topfboden 26 bewegt und die topfbodennahe Lamellenkupplung 2 durch Zusammenpressen des zugehörigen Lamellenpaketes 8 schließt. Bei einer Druckbeaufschlagung des zweiten, topfbodenfemen Kolbens 7 wird dieser dagegen zusammen mit seinen Fingern 53 von dem Topfboden 26 wegbewegt, sodass die freien Wirkflächen der Finger 53 die Lamellen 11, 13 des topfbodenfemen Lamellenpaketes 9 zusammenpressen.

Wie Fig. 2 außerdem offenbart, sind bei dieser Betätigungsanordnung 50 die beiden Druckausgleichsräume 56 beziehungsweise 57 an der topfbodennahen respektive topfbodenfemen Seite der Kolben 6, 7 angeordnet, so dass die den beiden Kolben zugeordneten Druckräume sowie eine diesbezügliche Trennwand zwischen denselben ausgebildet sind.

Die Kühlölzufuhr erfolgt bei der Betätigungsanordnung 50 gemäß Fig. 2 daher vorzugsweise über getrennte Strömungswege, so dass das topfbodennahe Lamellenpaket 8 aus dem Druckausgleichsraum 56 über einen Strömungsweg 54 mit Kühlöl versorgbar ist, der durch radiale Öffnungen 58 im Innenlamellenträger 16 führt.

Dagegen gelangt Kühlöl für das topfbodenfeme Lamellenpaket 9 von dem Druckausgleichsraum 57 entlang eines Strömungsweges 55 über radiale Öffnungen 59 im Innenlamellenträger 16 zu den Innen- und Außenlamellen 11, 13 der topfbodenfemen Lamellenkupplung 3.

Abweichend von dem Schaltelementaufbau als Getriebekupplung gemäß den Ausführungsbeispielen der Figuren 1 und 2 kann alternativ dazu vorgesehen sein, dass mindestens eines der beiden Schaltelemente als Getriebebremse ausgebildet ist. Sind beide Schaltelemente als Lamellenbremse ausgebildet, so ist entweder deren gemeinsamer Innenlamellenträger drehfest mit einem hier nicht dargestellten Getriebegehäuse verbunden, oder aber es sind deren getrennte Außenlamellenträger drehfest mit dem Getriebegehäuse verbunden. Ist nur eines der beiden Schaltelemente als Lamellenbremse ausgebildet, so ist dann der Außenlamellenträger dieser Lamellenbremse drehfest mit dem Getriebegehäuse verbunden. Der Fachmann wird den mit dem Getriebegehäuse wirkverbundenen Lamellenträger bei Bedarf auch direkt in das Getriebegehäuse integrieren.

Das Getriebe selber kann beispielsweise als Stufenautomatgetriebe, stufenloses Automatgetriebe, automatisiertes Schaltgetriebe oder Doppelkupplungsgetriebe ausgeführt sein, unter Verwendung von mindestens dieser erfindungsgemäßen Baugruppe mit zwei Schaltelementen.

### Bezuoszeichen

- 1: Betätigungsanordnung
- 2: Erstes Reibschaltelement, erste Lamellenkupplung
- 3: Zweites Reibschaltelement, zweite Lamellenkupplung
- 4: Erste Servoeinrichtung
- 5: Zweite Servoeinrichtung
- 6: Kolben der ersten Servoeinrichtung
- 7: Kolben der zweiten Servoeinrichtung
- 8: Lamellenpaket der ersten Lamellenkupplung
- 9: Lamellenpaket der zweiten Lamellenkupplung
- 10: Innenlamellen der ersten Lamellenkupplung
- 11: Außenlamellen der ersten Lamellenkupplung
- 12: Innenlamellen der zweiten Lamellenkupplung
- 13: Außenlamellen der zweiten Lamellenkupplung
- 14: Außenlamellenträger der ersten Lamellenkupplung
- 15: Außenlamellenträger der zweiten Lamellenkupplung
- 16: Gemeinsamer Innenlamellenträger
- 17: Druckausgleichsraum der ersten Servoeinrichtung
- 18: Druckausgleichsraum der zweiten Servoeinrichtung
- 19: Finger an erstem Kolben
- 20: Druckteller an zweitem Kolben
- 21: Erster radialer Durchbruch am Innenlamellenträger
- 22: Zweiter radialer Durchbruch am Innenlamellenträger
- 23: Radiale Ausnehmung am Innenlamellenträger für die Finger
- 24: Strömungsweg zur erster Lamellenkupplung
- 25: Strömungsweg zur zweiter Lamellenkupplung
- 26: Topfboden des Innenlamellenträgers
- 27: Topfraum
- 50: Betätigungsanordnung
- 51: Finger am ersten Kolben
- 52: Finger am zweiten Kolben
- 53: Radialer Durchbruch im Innenlamellenträger für die Finger 51, 52
- 54: Strömungsweg zum ersten Lamellenpaket
- 55: Strömungsweg zum zweiten Lamellenpaket
- 56: Erster Druckausgleichsraum
- 57: Zweiter Druckausgleichsraum
- 58: Erste radiale Öffnung im Innenlamellenträger
- 59: Zweite radiale Öffnung im Innenlamellenträger

## Patentansprüche

1. Betätigungsanordnung (1) für zwei axial unmittelbar hintereinander und radial im wesentlichen am gleichen Getriebedurchmesser angeordnete, als Lamellenkupplungen oder Lamellenbremsen ausgebildete druckmittelbetätigbare Reibschaltelemente (2, 3) in einem Getriebe, deren Innenlamellen (10,11) und Außenlamellen (12, 13) an Lamellenträgern befestigt sind, und denen jeweils eine Servoeinrichtung (4, 5) zugeordnet ist, wobei
- die Innenlamellen (10, 11) beider Reibschaltelemente (2, 3) an einem gemeinsamen Innenlamellenträger (16) angeordnet sind,
- der Innenlamellenträger (16) hinsichtlich seiner Querschnittsgeometrie als axial einseitig geöffneter Topf ausgebildet ist,
- die beiden Servoeinrichtungen (4, 5) radial zumindest überwiegend innerhalb des durch den topfförmigen Innenlamellenträger (16) gebildeten Topfraum (27) angeordnet sowie zumindest teilweise axial nebeneinander und im Wesentlichen radial unterhalb von Lamellenpaketen (8, 9) der beiden Reibschaltelemente (2, 3) positioniert sind,
- das erste Reibschaltelement (2) nahe einem Topfboden (26) des Innenlamellenträgers (16) angeordnet ist,
- die beiden Reibschaltelemente (2, 3) durch die Servoeinrichtungen (4, 5) individuell und voneinander unabhängig betätigbar sind, und
- die zweite Servoeinrichtung (5) über einen axial beweglichen Kolben (7) verfügt, bei dem im Bereich seines Außendurchmessers ein radial ausgerichteter Druckteller (20) ausgebildet ist, dessen radial freies Ende auf das der zweiten Servoeinrichtung (5) zugeordnete Lamellenpaket (9) wirkt und dabei das topfbodenfeme axial offene Ende des Innenlamellenträgers (16) in radialer Richtung übergreift und in axialer Richtung übergreifen kann,
**dadurch gekennzeichnet,**
**dass** die erste Servoeinrichtung (4) über einen axial beweglichen Kolben (6) verfügt, bei dem im Bereich seines Außendurchmessers am Umfang verteilt mehrere radial ausgerichtete Finger (19) ausgebildet sind, deren radial freie Enden auf das der ersten Servoeinrichtung (4) zugeordnete Lamellenpaket (8) wirken und dabei am Außendurchmesser des für beide Reibschaltelemente (2, 3) gemeinsamen Innenlamellenträgers (16) im Bereich axial zwischen den beiden Lamellenpaketen (8, 9) umfangsverteilt angeordnete radiale Durchbrüche (23) des Innenlamellenträgers (16) radial durchgreifen.

2. Betätigungsanordnung nach Anspruch 1, **dadurch gekennzeichnet,**
- **dass** die dem ersten, topfbodennahen Reibschaltelement (2) zugeordnete erste Servoeinrichtung (4) an den Topfboden (26) des Innenlamellenträgers (16) angrenzt und zumindest überwiegend radial unterhalb des Lamellenpaketes (8) des ersten Reibschaltelementes (2) angeordnet ist,
- **dass** die erste Servoeinrichtung (4) an ihrem Kolben (6) am Umfang verteilt mehrere Finger (19) aufweist, welche die radialen Durchbrüche (25) des Innenlamellenträgers (16) in radialer Richtung durchgreifen und das Lamellenpaket (8) des ersten Reibschaltelementes (2) bei dessen Schließen axial in Richtung Topfboden (26) des Innenlamellenträgers (16) betätigen,
- **dass** die dem zweiten, topfbodenfemen Reibschaltelement (3) zugeordnete zweite Servoeinrichtung (5) axial an die erste Servoeinrichtung (4) angrenzt und zumindest überwiegend radial unterhalb des Lamellenpaketes (9) des zweiten Reibschaltelementes (3) angeordnet ist und
- **dass** die zweite Servoeinrichtung (5) an ihrem Kolben (7) einen Druckteller (20) aufweist, welcher das topfbodenfeme axial offene Ende des Innenlamellenträgers (16) in radialer Richtung übergreift und in axialer Richtung übergreifen kann und das Lamellenpaket (9) des zweiten Reibschaltelementes (3) bei dessen Schließen axial in Richtung Topfboden (26) des Innenlamellenträgers (16) betätigt.

3. Betätigungsanordnung nach Anspruch 1 oder 2, **dadurch gekennzeichnet, dass** der Druckteller (20) des Kolbens (7) der zweiten Servoeinrichtung (5) im Wesentlichen ringförmig ausgebildet ist.

4. Betätigungsanordnung nach Anspruch 1 oder 2, **dadurch gekennzeichnet, dass** der Druckteller (20) des Kolbens (7) der zweiten Servoeinrichtung (5) als ein Verbund aus mehreren umfangverteilten Fingern ausgebildet ist.

5. Betätigungsanordnung (50) für zwei axial unmittelbar hintereinander und radial im wesentlichen am gleichen Getriebedurchmesser angeordnete, als Lamellenkupplungen oder Lamellenbremsen ausgebildete druckmittelbetätigbare Reibschaltelemente (2, 3) in einem Getriebe, deren Innenlamellen (10, 11) und Außenlamellen (12, 13) an Lamellenträgern befestigt sind, und denen jeweils eine Servoeinrichtung (4, 5) zugeordnet ist, wobei
- die Innenlamellen (10, 11) beider Reibschaltelemente (2, 3) an einem gemeinsamen Innenlamellenträger (16) angeordnet sind,
- der Innenlamellenträger (16) hinsichtlich seiner Querschnittsgeometrie als axial einseitig geöffneter Topf ausgebildet ist,
- die beiden Servoeinrichtungen (4, 5) radial zumindest überwiegend innerhalb des durch den topfförmigen Innenlamellenträger (16) gebildeten Topfraum (27) angeordnet sowie zumindest teilweise axial nebeneinander und im Wesentlichen radial unterhalb von Lamellenpaketen (8, 9) der beiden Reibschaltelemente (2, 3) positioniert sind,
- das erste Reibschaltelement (2) nahe einem Topfboden (26) des Innenlamellenträgers (16) angeordnet ist und
- die beiden Reibschaltelemente (2, 3) durch die Servoeinrichtungen (4, 5) individuell und voneinander unabhängig betätigbar sind,
**dadurch gekennzeichnet,**
**dass** jede der beiden Servoeinrichtungen (4, 5) über einen axial beweglichen Kolben (6, 7) verfügt, bei dem im Bereich seines Außendurchmessers am Umfang verteilt mehrere radial ausgerichtete Finger (19, 51, 52) ausgebildet sind, deren radial freie Enden auf das der jeweiligen Servoeinrichtung (4, 5) zugeordnetes Lamellenpaket (8, 9) wirken und dabei am Außendurchmesser des für beide Reibschaltelemente (2, 3) gemeinsamen Innenlamellenträgers (16) im Bereich axial zwischen den beiden Lamellenpaketen (8, 9) umfangsverteilt angeordnete radiale Durchbrüche (25, 53) des Innenlamellenträgers (16) radial durchgreifen.

6. Betätigungsanordnung nach Anspruch 5, **dadurch gekennzeichnet,**
- **dass** die dem ersten, topfbodennahen Reibschaltelement (2) zugeordnete erste Servoeinrichtung (4) an den Topfboden (26) des Innenlamellenträgers (16) angrenzt und zumindest überwiegend radial unterhalb des Lamellenpaketes (8) des ersten Reibschaltelementes (2) angeordnet ist,
- **dass** die dem zweiten, topfbodenfemen Reibschaltelement (3) zugeordnete zweite Servoeinrichtung (5) axial an die erste Servoeinrichtung (4) angrenzt und zumindest überwiegend radial unterhalb des Lamellenpaketes (9) des zweiten Reibschaltelementes (3) angeordnet ist und
- **dass** beide Servoeinrichtungen (4, 5) an ihrem jeweiligen Kolben (6, 7) am Umfang verteilt mehrere, im wesentlichen radial ausgerichtete Finger (51, 52) aufweisen, welche die am Außendurchmesser des Innenlamellenträgers (16) im Bereich axial zwischen den beiden Lamellenpaketen (8, 9) vorgesehenen umfangsverteilten radialen Durchbrüche (53) in radialer Richtung durchgreifen und mit ihrem radial äußeren freien Ende axial auf das ihnen jeweils zugeordnete Lamellenpaket (8, 9) wirken,
- wobei das erste, topfbodennahe Reibschaltelement (2) durch ziehende Betätigung des Kolbens (6) der ersten Servoeinrichtung (4) über die derem Kolben (6) zugeordneten Finger (51) achsparallel in Richtung zum Topfboden (26) des Innenlamellenträgers (16) geschlossen wird und
- wobei das zweite, topfbodenfeme Reibschaltelement (3) durch drückende Betätigung des Kolbens (7) der zweiten Servoeinrichtung (5) in zum Topfboden (26) des Innenlamellenträgers (16) entgegengesetzter Rich-tung geschlossen wird.

7. Betätigungsanordnung nach Anspruch 6, **dadurch gekennzeichnet, dass** jedem der im Bereich axial zwischen den beiden Lamellenpaketen (8, 9) vorgesehenen umfangsverteilten radialen Durchbrüchen (53) jeweils ein Finger (51) des Kolbens (6) der ersten Servoeinrichtung (4) und jeweils ein Finger (52) des Kolbens (7) der zweiten Servoeinrichtung (5) zugeordnet ist.

8. Betätigungsanordnung nach Anspruch 6 oder 7, **dadurch gekennzeichnet, dass** die Finger (51, 52) der Kolben (6, 7) beider Servoeinrichtungen (4, 5) räumlich gesehen umfangsverteilt jeweils axial hintereinander angeordnet sind.

9. Betätigungsanordnung nach Anspruch 6 oder 7, **dadurch gekennzeichnet, dass** die Finger (51, 52) der Kolben (6, 7) beider Servoeinrichtungen (4, 5) räumlich gesehen zueinander in Umfangsrichtung axial ineinander verschränkt in der gleichen Axialebene des Getriebes angeordnet sind.

10. Betätigungsanordnung nach wenigstens einem der vorherigen Ansprüche, **dadurch gekennzeichnet, dass** die beiden Kolben (6, 7) der Servoeinrichtungen (4, 5) axial unmittelbar nebeneinander angeordnet sind.

11. Betätigungsanordnung nach wenigstens einem der vorherigen Ansprüche, **dadurch gekennzeichnet, dass** die erste Servoeinrichtung (4) und/oder die zweite Servoeinrichtung (5) einen dynamischen Betätigungsdruckausgleich aufweisen.

12. Betätigungsanordnung nach Anspruch 11, **dadurch gekennzeichnet, dass** die Druckausgleichsräume (17, 56; 18, 57) des dynamischen Betätigungsdruckausgleichs der Servoeinrichtungen (4; 5) axial benachbart zu den jeweiligen Druckräumen der Servoeinrichtungen (4; 5) angeordnet sind.

13. Betätigungsanordnung nach Anspruch 11 oder 12, **dadurch gekennzeichnet, dass** der dem ersten, topfbodennahen Kolben (6) zugeordnete Druckausgleichsraum (17, 56) axial an den Topfboden (26) des Innenlamellenträgers (16) angrenzt.

14. Betätigungsanordnung nach Anspruch 11, 12 oder 13, **dadurch gekennzeichnet, dass** der dem zweiten, topfbodenfemen Kolben (7) zugeordnete Druckausgleichsraum (18) axial zwischen dem ersten Kolben (6) und dem zweiten Kolben (7) angeordnet ist.

15. Betätigungsanordnung nach Anspruch 11, 12 oder 13, **dadurch gekennzeichnet, dass** der dem zweiten, topfbodenfemen Kolben (7) zugeordnete Druckausgleichsraum (57) axial auf der Seite des zweiten, topfbodenfemen Kolbens (7) angeordnet ist, die dem ersten, topfbodennahen Kolben (6) gegenüber liegt.

16. Betätigungsanordnung nach Anspruch 11, 12, 13 oder 15, **dadurch gekennzeichnet, dass** der Druckausgleichsraum (57) der zweiten Servoeinrichtung (5) im Bereich des topfbodenfemen axialen Randes des Innenlamellenträgers (16) angeordnet ist.

17. Betätigungsanordnung nach wenigstens einem der Ansprüche 11 bis 16, **dadurch gekennzeichnet, dass** der dem jeweiligen Kolben (6; 7) zugeordnete Druckausgleichsraum (17, 56; 18, 57) räumlich gesehen entweder axial links oder axial rechts von dem Druckraum angeordnet ist, der dem jeweiligen Kolben (6; 7) zugeordnet ist.

18. Betätigungsanordnung nach wenigstens einem der Ansprüche 11 bis 17, **dadurch gekennzeichnet, dass** den Lamellen (10, 12) des ersten Reibschaltelementes (2) Kühlöl zugeführt wird, das aus dem dem ersten Reibschaltelement (2) zugeordneten Druckausgleichsraum (17, 56) über einen Strömungsweg (24, 54) abfließen kann, der zwischen der radialen Außenseite dieses Druckausgleichsraumes (17, 56) und der radialen Innenseite des Innenlamellenträgers (16) ausgebildet ist und durch radiale Öffnungen (21, 58) im Innenlamellenträger (16) führt, die räumlich gesehen im Bereich des Lamellenpaketes (8) des ersten Reibschaltelementes (2) angeordnet sind.

19. Betätigungsanordnung nach wenigstens einem der Ansprüche 11 bis 17, **dadurch gekennzeichnet, dass** den Lamellen (11, 13) des zweiten Reibschaltelementes (3) Kühlöl zugeführt wird, das aus dem dem zweiten Reibschaltelement (3) zugeordneten Druckausgleichsraum (18, 57) über einen Strömungsweg (25, 55) abfließen kann, der zwischen der radialen Außenseite dieses Druckausgleichsraums (18, 57) und der radialen Innenseite des Innenlamellenträgers (16) ausgebildet ist und durch radiale Öffnungen (22, 59) im Innenlamellenträger (16) führt, die räumlich gesehen im Bereich des Lamellenpaketes (9) des zweiten Reibschaltelementes (3) angeordnet sind.

20. Betätigungsanordnung nach wenigstens einem der vorherigen Ansprüche, **dadurch gekennzeichnet, dass** die Kühlölversorgung wenigstens eines der Lamellenpakete (8, 9) der beiden Reibschaltelemente (2, 3) durch gesonderte Zuführwege erfolgt, die nicht durch den gemeinsamen Innenlamellenträger (16) führen.

21. Betätigungsanordnung nach wenigstens einem der vorherigen Ansprüche, **dadurch gekennzeichnet, dass** die radialen Durchbrüche (23, 53) in dem Innenlamellenträger (16) zur Aufnahme der Finger (19, 51, 52) in axialer Richtung länger sind als die axiale Erstreckung dieser Finger (19, 51, 52) plus dem Lüftspiel des Lamellenpaketes (8, 9) des jeweils zugeordneten Reibschaltelementes (2, 3).

## Claims

1. Actuating arrangement (1) for two pressure-medium-actuable frictional shift elements (2, 3), which are arranged axially directly one behind the other and radially substantially at the same transmission diameter and which are designed as multiplate clutches or multiplate brakes, in a transmission, the inner plates (10, 11) and outer plates (12, 13) of which frictional shift elements are fastened to plate carriers, and which frictional shift elements are assigned in each case one servo device (4, 5),
- with the inner plates (10, 11) of the two frictional shift elements (2, 3) being arranged on a common inner plate carrier (16),
- with the inner plate carrier (16) being designed, in terms of its cross-sectional geometry, as a pot which is open axially at one side,
- with the two servo devices (4, 5) being arranged radially at least predominantly within the pot chamber (27) formed by the pot-shaped inner plate carrier (16) and at least partially axially adjacent to one another and substantially radially below plate packs (8, 9) of the two frictional shift elements (2, 3),
- with the first frictional shift element (2) being arranged close to a pot base (26) of the inner plate carrier (16),
- with it being possible for the two frictional shift elements (2, 3) to be actuated individually and independently of one another by the servo devices (4, 5), and
- with the second servo device (5) having an axially movable piston (7) on which, in the region of the outer diameter thereof, is formed a radially aligned thrust plate (20) whose radially free end acts on the plate pack (9) assigned to the second servo device (5) and in so doing engages in the radial direction over, and can engage in the axial direction over, the axially open end, which is remote from the pot base, of the inner plate carrier (16),
**characterized**
**in that** the first servo device (4) has an axially movable piston (6) on which, in the region of the outer diameter thereof, a plurality of radially aligned fingers (19) are formed in a circumferentially distributed manner, the radially free ends of which fingers act on the plate pack (8) assigned to the first servo device (4) and in so doing extend through radial apertures (23) of the inner plate carrier (16), which radial apertures are arranged in a circumferentially distributed manner on the outer diameter of the inner plate carrier (16), which is common to the two frictional shift elements (2, 3), in the region axially between the two plate packs (8, 9).

2. Actuating arrangement according to Claim 1, **characterized**
- **in that** the first servo device (4) which is assigned to the first frictional shift element (2) close to the pot base adjoins the pot base (26) of the inner plate carrier (16) and is arranged at least predominantly radially below the plate pack (8) of the first frictional shift element (2),
- **in that** the first servo device (4) has, on its piston (6), a plurality of circumferentially distributed fingers (19) which extend in the radial direction through the radial apertures (25) of the inner plate carrier (16) and which actuate the plate pack (8) of the first frictional shift element (2), when closing the latter, axially in the direction of the pot base (26) of the inner plate carrier (16),
- **in that** the second servo device (5) assigned to the second frictional shift element (3) remote from the pot base axially adjoins the first servo device (4) and is arranged at least predominantly radially below the plate pack (9) of the second frictional shift element (3), and
- **in that** the second servo device (5) has, on its piston (7), a thrust plate (20) which engages in the radial direction over, and can engage in the axial direction over, the axially open end, which is remote from the pot base, of the inner plate carrier (16), which thrust plate actuates the plate pack (9) of the second frictional shift element (3), when closing the latter, axially in the direction of the pot base (26) of the inner plate carrier (16).

3. Actuating arrangement according to Claim 1 or 2, **characterized in that** the thrust plate (20) of the piston (7) of the second servo device (5) is of substantially annular design.

4. Actuating arrangement according to Claim 1 or 2, **characterized in that** the thrust plate (20) of the piston (7) of the second servo device (5) is designed as a combination of a plurality of circumferentially distributed fingers.

5. Actuating arrangement (50) for two pressure-medium-actuable frictional shift elements (2, 3), which are arranged axially directly one behind the other and radially substantially at the same transmission diameter and which are designed as multiplate clutches or multiplate brakes, in a transmission, the inner plates (10, 11) and outer plates (12, 13) of which frictional shift elements are fastened to plate carriers, and which frictional shift elements are assigned in each case one servo device (4, 5),
- with the inner plates (10, 11) of the two frictional shift elements (2, 3) being arranged on a common inner plate carrier (16),
- with the inner plate carrier (16) being designed, in terms of its cross-sectional geometry, as a pot which is open axially at one side,
- with the two servo devices (4, 5) being arranged radially at least predominantly within the pot chamber (27) formed by the pot-shaped inner plate carrier (16) and at least partially axially adjacent to one another and substantially radially below plate packs (8, 9) of the two frictional shift elements (2, 3),
- with the first frictional shift element (2) being arranged close to a pot base (26) of the inner plate carrier (16),
- with it being possible for the two frictional shift elements (2, 3) to be actuated individually and independently of one another by the servo devices (4, 5),
**characterized**
**in that** each of the two servo devices (4, 5) has an axially movable piston (6, 7) on which, in the region of the outer diameter thereof, a plurality of radially aligned fingers (19, 51, 52) are formed in a circumferentially distributed manner, the radially free ends of which fingers act on the plate pack (8, 9) assigned to the respective servo device (4, 5) and in so doing extend radially through radial apertures (25, 53) of the inner plate carrier (16), which radial apertures are arranged in a circumferentially distributed manner on the outer diameter of the inner plate carrier (16), which is common to the two frictional shift elements (2, 3), in the region axially between the two plate packs (8, 9).

6. Actuating arrangement according to Claim 5, **characterized**
- **in that** the first servo device (4) which is assigned to the first frictional shift element (2) close to the pot base adjoins the pot base (26) of the inner plate carrier (16) and is arranged at least predominantly radially below the plate pack (8) of the first frictional shift element (2),
- **in that** the second servo device (5) assigned to the second frictional shift element (3) remote from the pot base axially adjoins the first servo device (4) and is arranged at least predominantly radially below the plate pack (9) of the second frictional shift element (3), and
- **in that** the two servo devices (4, 5) have, on their respective piston (6, 7), a plurality of circumferentially distributed fingers (51, 52) which are aligned substantially radially and which extend in the radial direction through circumferentially distributed radial apertures (53) provided on the outer diameter of the inner plate carrier (16) in the region axially between the two plate packs (8, 9), which fingers act with their radially outer free end axially on the plate pack (8, 9) respectively assigned to them,
- with the first frictional shift element (2) close to the pot base being closed by means of pulling actuation of the piston (6) of the first servo device (4), via the fingers (51) assigned to its piston (6), axially parallel in the direction of the pot base (26) of the inner plate carrier (16), and
- with the second frictional shift element (3) remote from the pot base being closed by means of pushing actuation of the piston (7) of the second servo device (5) in the direction away from the pot base (26) of the inner plate carrier (16).

7. Actuating arrangement according to Claim 6, **characterized in that** each of the circumferentially distributed radial apertures (53) provided in the region axially between the two plate packs (8, 9) is assigned in each case one finger (51) of the piston (6) of the first servo device (4) and in each case one finger (52) of the piston (7) of the second servo device (5).

8. Actuating arrangement according to Claim 6 or 7, **characterized in that** the fingers (51, 52) of the pistons (6, 7) of the two servo devices (4, 5) are arranged, in spatial terms, in a circumferentially distributed manner in each case axially one behind the other.

9. Actuating arrangement according to Claim 6 or 7, **characterized in that** the fingers (51, 52) of the pistons (6, 7) of the two servo devices (4, 5) are arranged, in spatial terms, so as to be axially interlaced with one another in the peripheral direction in the same axial plane of the transmission.

10. Actuating arrangement according to at least one of the preceding claims, **characterized in that** the two pistons (6, 7) of the servo devices (4, 5) are arranged axially directly adjacent to one another.

11. Actuating arrangement according to at least one of the preceding claims, **characterized in that** the first servo device (4) and/or the second servo device (5) have/has a dynamic actuating pressure compensation means.

12. Actuating arrangement according to Claim 11, **characterized in that** the pressure compensation chambers (17, 56; 18, 57) of the dynamic actuating pressure compensation means of the servo devices (4; 5) are arranged axially adjacent to the respective pressure chambers of the servo devices (4; 5).

13. Actuating arrangement according to Claim 11 or 12, **characterized in that** the pressure compensation chamber (17, 56) assigned to the first piston (6) close to the pot base axially adjoins the pot base (26) of the inner plate carrier (16).

14. Actuating arrangement according to Claim 11, 12 or 13, **characterized in that** the pressure compensation chamber (18) assigned to the second piston (7) remote from the pot base is arranged axially between the first piston (6) and the second piston (7).

15. Actuating arrangement according to Claim 11, 12 or 13, **characterized in that** the pressure compensation chamber (57) assigned to the second piston (7) remote from the pot base is arranged axially on that side of the second piston (7) remote from the pot base which faces away from the first piston (6) close to the pot base.

16. Actuating arrangement according to Claim 11, 12, 13 or 15, **characterized in that** the pressure compensation chamber (57) of the second servo device (5) is arranged in the region of that axial edge of the inner plate carrier (16) which is remote from the pot base.

17. Actuating arrangement according to at least one of Claims 11 to 16, **characterized in that** the pressure compensation chamber (17, 56; 18, 57) assigned to the respective piston (6; 7) is arranged, in spatial terms, either axially to the left or axially to the right of the pressure chamber assigned to the respective piston (6; 7).

18. Actuating arrangement according to at least one of Claims 11 to 17, **characterized in that** the plates (10, 12) of the first frictional shift element (2) are supplied with cooling oil which can flow out of the pressure compensation chamber (17, 56) assigned to the first frictional shift element (2) via a flow path (24, 54) which is formed between the radially outer side of said pressure compensation chamber (17, 56) and the radially inner side of the inner plate carrier (16) and which leads through radial openings (21, 58) in the inner plate carrier (16), which radial openings are arranged, in spatial terms, in the region of the plate pack (8) of the first frictional shift element (2).

19. Actuating arrangement according to at least one of Claims 11 to 17, **characterized in that** the plates (11, 13) of the second frictional shift element (3) are supplied with cooling oil which can flow out of the pressure compensation chamber (18, 57) assigned to the second frictional shift element (3) via a flow path (25, 55) which is formed between the radially outer side of said pressure compensation chamber (18, 57) and the radially inner side of the inner plate carrier (16) and which leads through radial openings (22, 59) in the inner plate carrier (16), which radial openings are arranged, in spatial terms, in the region of the plate pack (9) of the second frictional shift element (3).

20. Actuating arrangement according to at least one of the preceding claims, **characterized in that** the supply of cooling oil to at least one of the plate packs (8, 9) of the two frictional shift elements (2, 3) takes place through separate feed paths which do not lead through the common inner plate carrier (16).

21. Actuating arrangement according to at least one of the preceding claims, **characterized in that** the radial apertures (23, 53) in the inner plate carrier (16) for receiving the fingers (19, 51, 52) are longer in the axial direction than the axial extent of said fingers (19, 51, 52) plus the air play of the plate pack (8, 9) of the respectively associated frictional shift element (2, 3).

## Revendications

1. Système d'actionnement (1) pour deux éléments de changement de vitesse à friction (2, 3) disposés axialement immédiatement l'un derrière l'autre et radialement essentiellement sur le même diamètre de boîte de vitesses, pouvant être actionnés par un fluide sous pression et réalisés sous forme d'embrayages à lamelles ou de freins à lamelles dans une boîte de vitesses, dont les lamelles internes (10, 11) et les lamelles externes (12, 13) sont fixées sur des supports de lamelles, et auxquels est associé à chaque fois un dispositif d'asservissement (4, 5),
- les lamelles internes (10, 11) des deux éléments de changement de vitesse à friction (2, 3) étant disposées sur un support de lamelles internes commun (16),
- le support de lamelles internes (16) étant réalisé, en termes de sa géométrie en section transversale, sous forme de pot ouvert axialement d'un côté,
- les deux dispositifs d'asservissement (4, 5) étant disposés radialement au moins principalement à l'intérieur de l'espace de pot (27) formé par le support de lamelles internes (16) en forme de pot, et étant positionnés au moins en partie axialement l'un à côté de l'autre et essentiellement radialement en dessous de paquets de lamelles (8, 9) des deux éléments de changement de vitesse à friction (2, 3),
- le premier élément de changement de vitesse à friction (2) étant disposé à proximité d'un fond de pot (26) du support de lamelles internes (16),
- les deux éléments de changement de vitesse à friction (2, 3) pouvant être actionnés par les dispositifs d'asservissement (4, 5) individuellement et indépendamment l'un de l'autre, et
- le deuxième dispositif d'asservissement (5) disposant d'un piston déplaçable axialement (7), dans lequel, dans la région de son diamètre extérieur, est réalisé un plateau de pression (20) orienté radialement, dont l'extrémité libre radialement agit sur le paquet de lamelles (9) associé au deuxième dispositif d'asservissement (5) et vient en prise dans la direction radiale et peut venir en prise dans la direction axiale, en l'occurrence, par-dessus l'extrémité ouverte axialement et éloignée du fond de pot du support de lamelles internes (16),
**caractérisé en ce que**
le premier dispositif d'asservissement (4) dispose d'un piston déplaçable axialement (6), dans lequel sont réalisés, dans la région de son diamètre extérieur, plusieurs doigts (19) répartis sur la périphérie et orientés radialement, dont les extrémités libres radialement agissent sur le paquet de lamelles (8) associé au premier dispositif d'asservissement (4) et en l'occurrence viennent en prise radialement à travers des orifices radiaux (23) du support de lamelles internes (16) disposés de manière répartie sur la périphérie dans la région axialement entre les deux paquets de lamelles (8, 9) au niveau du diamètre extérieur du support de lamelles internes commun (16) pour les deux éléments de changement de vitesse à friction (2, 3).

2. Système d'actionnement selon la revendication 1, **caractérisé en ce que**
- le premier dispositif d'asservissement (4) associé au premier élément de changement de vitesse à friction (2) proche du fond de pot est adjacent au fond de pot (26) du support de lamelles internes (16) et est disposé au moins principalement radialement sous le paquet de lamelles (8) du premier élément de changement de vitesse à friction (2),
- le premier dispositif d'asservissement (4) présente plusieurs doigts (19) répartis sur la périphérie sur son piston (6), lesquels viennent en prise dans la direction radiale à travers les orifices radiaux (25) du support de lamelles internes (16) et actionnent le paquet de lamelles (8) du premier élément de changement de vitesse à friction (2) lors de sa fermeture axialement dans la direction du fond de pot (26) du support de lamelles internes (16),
- le deuxième dispositif d'asservissement (5) associé au deuxième élément de changement de vitesse à friction (3) éloigné du fond de pot est adjacent axialement au premier dispositif d'asservissement (4) et est disposé au moins principalement radialement en dessous du paquet de lamelles (9) du deuxième élément de changement de vitesse à friction (3) et
- le deuxième dispositif d'asservissement (5) présente, sur son piston (7), un plateau de pression (20) qui vient en prise dans la direction radiale et peut venir en prise dans la direction axiale par le dessus avec l'extrémité ouverte axialement et éloignée du fond de pot du support de lamelles internes (16), et actionne le paquet de lamelles (9) du deuxième élément de changement de vitesse à friction (3) lors de sa fermeture axialement dans la direction du fond de pot (26) du support de lamelles internes (16).

3. Système d'actionnement selon la revendication 1 ou 2, **caractérisé en ce que** le plateau de pression (20) du piston (7) du deuxième dispositif d'asservissement (5) est réalisé de manière essentiellement annulaire.

4. Système d'actionnement selon la revendication 1 ou 2, **caractérisé en ce que** le plateau de pression (20) du piston (7) du deuxième dispositif d'asservissement (5) est réalisé sous forme d'assemblage formé de plusieurs doigts répartis sur la périphérie.

5. Système d'actionnement (50) pour deux éléments de changement de vitesse à friction (2, 3) disposés axialement immédiatement l'un derrière l'autre et radialement essentiellement sur le même diamètre de boîte de vitesses, pouvant être actionnés par un fluide sous pression et réalisés sous forme d'embrayages à lamelles ou de freins à lamelles dans une boîte de vitesses, dont les lamelles internes (10, 11) et les lamelles externes (12, 13) sont fixées sur des supports de lamelles, et auxquels est associé à chaque fois un dispositif d'asservissement (4, 5),
- les lamelles internes (10, 11) des deux éléments de changement de vitesse à friction (2, 3) étant disposées sur un support de lamelles internes commun (16),
- le support de lamelles internes (16) étant réalisé, en termes de sa géométrie en section transversale, sous forme de pot ouvert axialement d'un côté,
- les deux dispositifs d'asservissement (4, 5) étant disposés radialement au moins principalement à l'intérieur de l'espace de pot (27) formé par le support de lamelles internes (16) en forme de pot, et étant positionnés au moins en partie axialement l'un à côté de l'autre et essentiellement radialement en dessous de paquets de lamelles (8, 9) des deux éléments de changement de vitesse à friction (2, 3),
- le premier élément de changement de vitesse à friction (2) étant disposé à proximité d'un fond de pot (26) du support de lamelles internes (16), et
- les deux éléments de changement de vitesse à friction (2, 3) pouvant être actionnés par les dispositifs d'asservissement (4, 5) individuellement et indépendamment l'un de l'autre,
**caractérisé en ce que**
chacun des deux dispositifs d'asservissement (4, 5) dispose d'un piston déplaçable axialement (6, 7), dans lequel sont réalisés, dans la région de son diamètre extérieur, plusieurs doigts (19, 51, 52) répartis sur la périphérie et orientés radialement, dont les extrémités libres radialement agissent sur le paquet de lamelles (8, 9) associé à chaque dispositif d'asservissement (4, 5) et en l'occurrence viennent en prise radialement au niveau du diamètre extérieur du support de lamelles internes commun (16) pour les deux éléments de changement de vitesse à friction (2, 3) dans la région axialement entre les deux paquets de lamelles (8, 9) à travers des orifices radiaux (25, 53) du support de lamelles internes (16) disposés de manière répartie sur la périphérie.

6. Système d'actionnement selon la revendication 5, **caractérisé en ce que**
- le premier dispositif d'asservissement (4) associé au premier élément de changement de vitesse à friction (2) proche du fond de pot est adjacent au fond de pot (26) du support de lamelles internes (16) et est disposé au moins principalement radialement sous le paquet de lamelles (8) du premier élément de changement de vitesse à friction (2),
- le deuxième dispositif d'asservissement (5) associé au deuxième élément de changement de vitesse à friction (3) éloigné du fond de pot est adjacent axialement au premier dispositif d'asservissement (4) et est disposé au moins principalement radialement en dessous du paquet de lamelles (9) du deuxième élément de changement de vitesse à friction (3) et
- les deux dispositifs d'asservissement (4, 5) présentent, sur leur piston respectif (6, 7), plusieurs doigts (51, 52) répartis sur la périphérie et orientés essentiellement radialement, qui viennent en prise dans la direction radiale à travers des orifices radiaux (53) répartis sur la périphérie et prévus au niveau du diamètre extérieur du support de lamelles internes (16) dans la région axialement entre les deux paquets de lamelles (8, 9) et agissent avec leur extrémité libre radialement extérieure sur le paquet de lamelles (8, 9) qui leur est respectivement associé,
- le premier élément de changement de vitesse à friction (2) proche du fond de pot étant fermé par l'actionnement en traction du piston (6) du premier dispositif d'asservissement (4) par le biais des doigts (51) associés à son piston (6) de manière parallèlement à l'axe dans la direction du fond de pot (26) du support de lamelles internes (16) et
- le deuxième élément de changement de vitesse à friction (3) éloigné du fond de pot étant fermé par l'actionnement en poussée du piston (7) du deuxième dispositif d'asservissement (5) dans la direction opposée au fond de pot (26) du support de lamelles internes (16).

7. Système d'actionnement selon la revendication 6, **caractérisé en ce qu'**à chacun des orifices radiaux (53) répartis sur la périphérie et prévus dans la région axialement entre les deux paquets de lamelles (8, 9) est associé un doigt respectif (51) du piston (6) du premier dispositif d'asservissement (4) et un doigt respectif (52) du piston (7) du deuxième dispositif d'asservissement (5).

8. Système d'actionnement selon la revendication 6 ou 7, **caractérisé en ce que** les doigts (51, 52) des pistons (6, 7) des deux dispositifs d'asservissement (4, 5) sont disposés, vus dans l'espace, de manière répartie sur la périphérie à chaque fois les uns derrière les autres axialement.

9. Système d'actionnement selon la revendication 6 ou 7, **caractérisé en ce que** les doigts (51, 52) des pistons (6, 7) des deux dispositifs d'asservissement (4, 5) sont disposés, vus dans l'espace, de manière emboîtée l'un dans l'autre axialement dans la direction périphérique, dans le même plan axial que la boîte de vitesses.

10. Système d'actionnement selon au moins l'une quelconque des revendications précédentes, **caractérisé en ce que** les deux pistons (6, 7) des dispositifs d'asservissement (4, 5) sont disposés axialement immédiatement l'un à côté de l'autre.

11. Système d'actionnement selon au moins l'une quelconque des revendications précédentes, **caractérisé en ce que** le premier dispositif d'asservissement (4) et/ou le deuxième dispositif d'asservissement (5) présente(nt) une compensation dynamique de la pression d'actionnement.

12. Système d'actionnement selon la revendication 11, **caractérisé en ce que** les espaces de compensation de la pression (17, 56 ; 18, 57) de la compensation dynamique de la pression d'actionnement des dispositifs d'asservissement (4 ; 5) sont disposés axialement à côté des espaces de pression respectifs des dispositifs d' asservissement (4 ; 5).

13. Système d'actionnement selon la revendication 11 ou 12, **caractérisé en ce que** l'espace de compensation de la pression (17, 56) associé au premier piston (6) proche du fond de pot est axialement adjacent au fond de pot (26) du support de lamelles internes (16).

14. Système d'actionnement selon les revendications 11, 12 ou 13, **caractérisé en ce que** l'espace de compensation de la pression (18) associé au deuxième piston (7) éloigné du fond de pot est disposé axialement entre le premier piston (6) et le deuxième piston (7).

15. Système d'actionnement selon les revendications 11, 12 ou 13, **caractérisé en ce que** l'espace de compensation de la pression (57) associé au deuxième piston (7) éloigné du fond de pot est disposé axialement du côté du deuxième piston (7) éloigné du fond de pot, qui est opposé au premier piston (6) proche du fond de pot.

16. Système d'actionnement selon les revendications 11, 12, 13 ou 15, **caractérisé en ce que** l'espace de compensation de la pression (57) du deuxième dispositif d'asservissement (5) est disposé dans la région du bord axial éloigné du fond de pot du support de lamelles internes (16).

17. Système d'actionnement selon au moins l'une quelconque des revendications 11 à 16, **caractérisé en ce que** l'espace de compensation de la pression (17, 56 ; 18, 57) associé au piston respectif (6 ; 7), vu dans l'espace, est disposé soit axialement à gauche soit axialement à droite de l'espace de pression auquel est associé le piston respectif (6 ; 7).

18. Système d'actionnement selon au moins l'une quelconque des revendications 11 à 17, **caractérisé en ce que** de l'huile de refroidissement est acheminée aux lamelles (10, 12) du premier élément de changement de vitesse à friction (2), l'huile pouvant s'écouler hors de l'espace de compensation de la pression (17, 56) associé au premier élément de changement de vitesse à friction (2) par le biais d'une voie d'écoulement (24, 54), qui est réalisée entre le côté extérieur radial de cet espace de compensation de la pression (17, 56) et le côté intérieur radial du support de lamelles internes (16), et qui conduit par des ouvertures radiales (21, 58) dans le support de lamelles internes (16), ces ouvertures, vues dans l'espace, étant disposées dans la région du paquet de lamelles (8) du premier élément de changement de vitesse à friction (2).

19. Système d'actionnement selon au moins l'une quelconque des revendications 11 à 17, **caractérisé en ce que** de l'huile de refroidissement est acheminée aux lamelles (11, 13) du deuxième élément de changement de vitesse à friction (3), l'huile pouvant s'écouler hors de l'espace de compensation de la pression (18, 57) associé au deuxième élément de changement de vitesse à friction (3) par le biais d'une voie d'écoulement (25, 55), qui est réalisée entre le côté extérieur radial de cet espace de compensation de la pression (18, 57) et le côté intérieur radial du support de lamelles internes (16), et qui conduit par des ouvertures radiales (22, 59) dans le support de lamelles internes (16), ces ouvertures, vues dans l'espace, étant disposées dans la région du paquet de lamelles (9) du deuxième élément de changement de vitesse à friction (3).

20. Système d'actionnement selon au moins l'une quelconque des revendications précédentes, **caractérisé en ce que** l'alimentation en huile de refroidissement d'au moins l'un des paquets de lamelles (8, 9) des deux éléments de changement de vitesse à friction (2, 3) s'effectue par des voies d'alimentation séparées qui ne passent pas par le support de lamelles internes commun (16).

21. Système d'actionnement selon au moins l'une quelconque des revendications précédentes, **caractérisé en ce que** les orifices radiaux (23, 53) dans le support de lamelles internes (16) pour recevoir les doigts (19, 51, 52) sont plus longs dans la direction axiale que l'étendue axiale de ces doigts (19, 51, 52) plus le jeu du paquet de lamelles (8, 9) de l'élément de changement de vitesse à friction respectif associé (2, 3).
